(19) Europäisches Patentamt
European Patent Office
Office européen des brevets

(11) **EP 4 468 314 A1**

(12) **EUROPEAN PATENT APPLICATION**
published in accordance with Art. 153(4) EPC

(43) Date of publication:
**27.11.2024 Bulletin 2024/48**

(21) Application number: 23743172.1

(22) Date of filing: **13.01.2023**

(51) International Patent Classification (IPC):
*H01B 13/00* (2006.01)     *C01B 25/14* (2006.01)
*H01B 1/10* (2006.01)     *H01M 4/62* (2006.01)
*H01M 10/052* (2010.01)     *H01M 10/0562* (2010.01)

(52) Cooperative Patent Classification (CPC):
**C01B 25/14; H01B 1/10; H01B 13/00; H01M 4/62;
H01M 10/052; H01M 10/0562;** Y02E 60/10

(86) International application number:
**PCT/JP2023/000708**

(87) International publication number:
**WO 2023/140178 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2022   JP 2022005854
07.10.2022   JP 2022162275**

(71) Applicant: **Idemitsu Kosan Co.,Ltd.**
**Tokyo 100-8321 (JP)**

(72) Inventors:
• **SEINO, Yoshikatsu**
  **Tokyo 100-8321 (JP)**
• **KANEKO, Yasunobu**
  **Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SULFIDE SOLID ELECTROLYTE**

(57)     A method for producing a sulfide solid electrolyte, which includes obtaining a mixture by mixing a raw material inclusion containing a lithium atom, a phosphorus atom, a sulfur atom, and a halogen atom in an organic solvent; and performing microwave irradiation on the mixture, is provided, and thereby a sulfide solid electrolyte can be efficiently produced while maintaining a particle diameter by reducing a heating temperature and suppressing granulation due to heating by employing a liquid phase method.

## Description

Technical Field

The present invention relates to a method for producing a sulfide solid electrolyte.

Background Art

In recent years, with the rapid spread of information-related devices such as personal computers, video cameras, and mobile phones, and communication devices, the development of batteries used as a power source for the devices has been regarded as important. Among them, lithium ion batteries have attracted attention from the viewpoint of high energy density.

Conventionally, since an electrolytic solution containing a flammable organic solvent has been used in a battery used for such an application, it is necessary to install a safety device for suppressing a temperature rise at the time of short circuit, and to improve a structure and material for preventing short circuit. In contrast, by replacing the electrolytic solution with a solid electrolyte to make the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence.

For example, as the solid phase method, a method of producing an amorphous or crystalline solid electrolyte by subjecting a raw material such as lithium sulfide or diphosphorus pentasulfide to a mechanical milling treatment using an apparatus such as a ball mill or a bead mill, and performing a heat treatment as necessary is known (for example, see PTL 1). In addition, among the liquid phase methods, as a homogeneous method, a method of dissolving a solid electrolyte in a solvent and reprecipitating the solid electrolyte is known (for example, see PTL 2), and as a heterogeneous method, a method of reacting a solid electrolyte raw material such as lithium sulfide in a solvent containing a polar aprotic solvent is known (for example, see PTLs 3 and 4, and NPL 1).

In addition, as a method for producing a solid electrolyte, PTL 5 and NPLs 2 and 3 disclose that an electrolyte having an amorphous $Li_3PS_4$ composition is produced by irradiating lithium sulfide and diphosphorus pentasulfide with microwaves in an organic solvent.

Citation List

Patent Literature

PTL 1: WO 2017/159667 A
PTL 2: JP 2014-191899 A
PTL 3: WO 2014/192309 A
PTL 4: WO 2018/054709 A
PTL 5: JP 2020-15661 A

Non Patent Literature

NPL 1: CHEMISTRY OF MATERIALS, 2017, No. 29, pp. 1830-1835
NPL 2: Journal of Materials Chemistry A, 2018, No. 6, pp. 21261-21265
NPL 3: Journal of Materials Chemistry A, 2018, No. 9, pp. 400-405

Summary of Invention

Technical Problem

The present invention has been made in view of such circumstances, and it is an object of the present invention to provide a method for producing a sulfide solid electrolyte, which can efficiently produce a sulfide solid electrolyte in which a liquid phase method is employed, a heating temperature is reduced, and granulation due to heating is suppressed to maintain a particle size.

Solution to Problem

A method for producing a sulfide solid electrolyte according to the present invention is a method for producing a sulfide solid electrolyte, including: obtaining a mixture by mixing a raw material inclusion containing a lithium atom, a phosphorus atom, a sulfur atom, and a halogen atom in an organic solvent; and performing microwave irradiation on the mixture.

Advantageous Effects of Invention

According to the present invention, it is possible to provide a method for producing a sulfide solid electrolyte capable of efficiently producing a sulfide solid electrolyte in which a liquid phase method is employed, a heating temperature is reduced, and granulation due to heating is suppressed to maintain a particle size.

Brief Description of Drawings

Fig. 1 is an X-ray diffraction spectrum of the sulfide solid electrolyte obtained in Example 1.

Fig. 2 is an X-ray diffraction spectrum of the sulfide solid electrolyte obtained in Example 2.

Fig. 3 is an X-ray diffraction spectrum of the sulfide solid electrolyte obtained in Example 3.

Fig. 4 is an X-ray diffraction spectrum of the sulfide solid electrolyte obtained in Comparative Example 1.

Fig. 5 is an X-ray diffraction spectrum of the sulfide solid electrolyte obtained in Comparative Example 2.

Fig. 6 is an X-ray diffraction spectrum of the sulfide solid electrolyte obtained in Comparative Example 3.

Fig. 7 is an X-ray diffraction spectrum of the sulfide solid electrolyte obtained in Comparative Example 4.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit.

(Findings Obtained by the Inventors to Reach the Present Invention)

As a result of intensive studies to solve the above-described problems, the present inventors have found the following matters, and have completed the present invention.

The solid phase method is mainly a solid phase reaction, and is characterized in that high ionic conductivity is easily realized because a solid electrolyte is easily obtained with high purity, but it is not suitable for mass production. In order to put all-solid batteries into practical use in recent years, an increase in size (mass production) for industrial production has been studied, and a liquid phase method has attracted attention as a method capable of being simply synthesized in a large amount in addition to versatility and applicability.

In the liquid phase method, firing is generally performed for the purpose of improving the crystallinity of a sulfide solid electrolyte. In particular, when a sulfide solid electrolyte having an argyrodite type crystal structure is produced, firing at a high temperature of about 400°C is required. Then, when firing at such a high temperature is performed, granulation occurs and the particle size becomes larger than that before firing, and therefore, there is a case where it is necessary to perform a pulverization treatment, and as a result, the cost of the sulfide solid electrolyte increases. In addition, when firing at a high temperature is required, problems such as promotion of corrosion of reaction equipment may occur, and thus, the cost of the sulfide solid electrolyte may increase due to an increase in equipment cost.

The present inventors have focused on the fact that in the conventional methods for producing a sulfide solid electrolyte by a liquid phase method disclosed in the above-mentioned PTLs 2 to 4 and NPL 1, there is no particular study on firing, and there is no problem that granulation occurs due to high-temperature firing and the particle size increases. In addition, when a sulfide solid electrolyte having an argyrodite type crystal structure is to be obtained among sulfide solid electrolytes, as is clear from the production method by a conventional liquid phase method disclosed in these documents and the production method described in the above-mentioned NPL 3, firing at a high temperature is inevitable.

Therefore, the present inventors have conducted intensive research on a method for producing a sulfide solid electrolyte, particularly regarding a firing operation, and have found that by performing microwave irradiation on a mixture obtained by mixing a raw material inclusion in an organic solvent, the heating temperature can be suppressed to a low temperature, and granulation due to heating can be suppressed. The reduction of the heating temperature leads not only to the reduction of the energy required for heating but also to the reduction of the equipment cost as described above. In addition, the fact that granulation due to heating can be suppressed and the particle size can be maintained is extremely effective in improving the efficiency of production and reducing costs because a pulverization treatment after heating becomes unnecessary.

It can be said that PTL 5, NPLs 2 and 3 describe that microwave irradiation is performed on a sulfide solid electrolyte. However, in all of the production methods disclosed in these documents, microwave irradiation is employed when electrolytes (lithium thiophosphates) having a $Li_3PS_4$ composition are produced using $Li_2S$ and $P_2S_5$, and the microwave irradiation is not performed on those containing halogen atoms. In addition, in PTL 5 and NPL 2, although it is described that an amorphous sulfide solid electrolyte is produced by microwave irradiation, for example, a crystalline sulfide solid electrolyte having an argyrodite type crystal structure is not produced. Then, NPL 3 describes that while microwave irradiation is performed as described above, firing at a high temperature is also performed.

Therefore, in view of the conventional production method, a method capable of producing a sulfide solid electrolyte in which the heating temperature is reduced, granulation due to heating is suppressed, and the particle size is maintained by an extremely simple operation of performing microwave irradiation instead of the firing operation in the conventional production method is a surprising phenomenon.

In the description herein, the "solid electrolyte" means an electrolyte that maintains a solid state at 25°C under a nitrogen atmosphere. The "sulfide solid electrolyte" obtained by the production method of the present embodiment means a solid electrolyte which contains an alkali metal atom, a sulfur atom, a phosphorus atom, and a halogen atom and has an ionic conductivity caused by an alkali metal atom such as a lithium atom. In addition, the "sulfide solid electrolyte" may contain a metal atom such as Ge, Na, K, Mg, Ca, Al, Si, Sb, Ti, or Zr.

In the present description, the "sulfide solid electrolyte" includes both a crystalline sulfide solid electrolyte and an amorphous sulfide solid electrolyte. In the description herein, the crystalline sulfide solid electrolyte is a solid electrolyte in which a peak derived from the solid electrolyte is observed in an X-ray diffraction pattern in X-ray diffraction measurement, and is a material in which the presence or absence of a peak derived from a raw material of the solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte (also referred to as a "glass component"). Therefore, the crystalline sulfide solid electrolyte includes a so-called glass ceramic obtained by heating an amorphous solid electrolyte (glass component) to a crystallization temperature or higher.

In addition, in the description herein, the amorphous sulfide solid electrolyte (glass component) means a material in which an X-ray diffraction pattern is a halo pattern in which a peak other than a peak substantially derived from a material is not observed in an X-ray diffraction measurement, and means that the presence or absence of a peak derived from a raw material of the solid electrolyte does not matter.

[Method for Producing Sulfide Solid Electrolyte]

A method for producing a sulfide solid electrolyte according to a first embodiment of the present embodiment is a method for producing a sulfide solid electrolyte, including: obtaining a mixture by mixing a raw material inclusion containing a lithium atom, a phosphorus atom, a sulfur atom, and a halogen atom in an organic solvent; and performing microwave irradiation on the mixture.

Conventionally, particularly in the case of producing a crystalline sulfide solid electrolyte, a step of crystallization by firing has been required. Above all, in the case of producing a sulfide solid electrolyte having an argyrodite type crystal structure, an extremely high heating temperature of about 400°C is required during firing, and therefore, as described above, an increase in equipment cost, an increase in particle size due to granulation, and consumption of energy for heating may occur. Therefore, the present inventors focused on performing heating by microwave irradiation as a firing operation.

Heating by microwave irradiation is a method in which a target substance is irradiated with microwaves to vibrate molecules of the substance, and the temperature of the substance is increased by frictional heat. The present inventors have considered that the temperature of the entire reaction system can be suppressed by selectively heating and reacting a raw material inclusion containing a compound serving as a raw material of a sulfide solid electrolyte by utilizing the feature of heating a target substance of microwave irradiation. Then, the present inventors have considered that the temperature of the entire reaction system can be suppressed by selectively heating the raw material inclusion by microwave irradiation in an organic solvent, and absorbing the heat of the raw material inclusion by the organic solvent, and have reached the present invention.

The production method of the present embodiment is a production method in which a sulfide solid electrolyte can be obtained while reducing the heating temperature by performing an extremely simple operation of microwave irradiation, and a sulfide solid electrolyte in which the particle size is maintained by suppressing granulation due to heating can be obtained. Further, by reducing the heating temperature, not only the equipment cost can be reduced, but also the consumption of energy required for heating can be reduced. In addition, by suppressing granulation due to heating and maintaining the particle size, a pulverization treatment after heating becomes unnecessary. As a result, the production method of the present embodiment can achieve the efficiency of the production of the sulfide solid electrolyte and the cost reduction.

A method for producing a sulfide solid electrolyte according to a second aspect of the present embodiment is the method for producing a sulfide solid electrolyte according to the first aspect, in which an integrated irradiation energy is 1.0 kW·s/g or more during the irradiation of microwaves at an output of 140 W/g or more per unit mass of the raw material inclusion contained in the mixture.

By irradiating the mixture with microwaves so as to satisfy the predetermined conditions, the reaction between the solid electrolyte raw materials in the raw material inclusion contained in the mixture is more easily promoted, whereby a sulfide solid electrolyte having higher crystallinity and higher ionic conductivity is more easily obtained.

A method for producing a sulfide solid electrolyte according to a third aspect of the present embodiment is the method for producing a sulfide solid electrolyte, in which the organic solvent has a dielectric loss factor at 25°C of 10.0 or less.

The third aspect is that the organic solvent in the first aspect has a predetermined dielectric loss factor.

The energy loss when a substance is placed in an electromagnetic field due to microwave irradiation is the total amount of conduction loss, dielectric loss, and magnetic loss, and when a liquid is placed in an electromagnetic field due to microwave irradiation, dielectric loss occurs, whereby the energy of the electric field is converted into thermal energy and heat is generated. That is, it can be said that the less the dielectric loss is, the more efficiently the energy by the microwave irradiation can be consumed in the raw material inclusion.

The dielectric loss factor is a loss factor in a relationship proportional to the dielectric loss. The dielectric loss factor and the dielectric loss have the following relationship.

$$\text{Dielectric loss} = \pi f \varepsilon_0 \varepsilon'' |\text{E}|^2$$

(f: frequency (1/sec), $\varepsilon_0$: dielectric constant of vacuum, $\varepsilon''$: dielectric loss factor of substance, |E|: electric field (V/m))

Thus, the dielectric loss factor serves as an index indicating the ease of heating by microwaves, and the smaller the dielectric loss factor, the smaller the dielectric loss. Therefore, when the dielectric loss factor of the organic solvent used in the production method of the present embodiment is 10.0 or less, the raw material inclusion can be more selectively heated, and therefore, the sulfide solid electrolyte can be more efficiently produced.

A method for producing a sulfide solid electrolyte according to a fourth aspect of the present embodiment is the method for producing a sulfide solid electrolyte, in which the organic solvent has a boiling point of 50°C or higher.

In the fourth aspect, an organic solvent having a predetermined boiling point is employed as the organic solvent in any one of the first to third aspects.

As the boiling point of the organic solvent is higher, the amount of the organic solvent volatilized when the raw material inclusion is selectively heated can be suppressed, and the raw material inclusion can be held more uniformly in the organic solvent. Therefore, the raw material inclusion can be easily selectively heated, and the amount of the organic solvent used can be reduced.

A method for producing a sulfide solid electrolyte according to a fifth aspect of the present embodiment is the method for producing a sulfide solid electrolyte, in which the organic solvent is an aromatic solvent.

In the fifth aspect, as the organic solvent in any one of the first to fourth aspects, an aromatic solvent, that is, an organic solvent having an aromatic ring is employed.

The aromatic solvent, which is an organic solvent having an aromatic ring, easily satisfies the properties in the third and fourth aspects, that is, the dielectric loss factor and the boiling point. Therefore, the sulfide solid electrolyte can be produced more efficiently.

A method for producing a sulfide solid electrolyte according to a sixth aspect of the present embodiment is the production method, in which a content of the raw material inclusion contained in the mixture is 1% by mass or more and 20% by mass or less.

In the sixth aspect, in any one of the first to fifth aspects, the content of the raw material inclusion contained in the mixture is in a predetermined range. Since the amount of the organic solvent to be used can be reduced, the sulfide solid electrolyte can be more efficiently produced.

A method for producing a sulfide solid electrolyte according to a seventh aspect of the present embodiment is the production method, in which the microwave irradiation is performed to heat the mixture at 150°C or higher and 360°C or lower.

In the seventh aspect, in any one of the first to sixth aspects, the temperature of the mixture is heated to a predetermined range. As described above, for example, when a sulfide solid electrolyte having an argyrodite type crystal structure is to be produced, firing at a high temperature of about 400°C is required according to the conventional production method. However, according to the production method of the present embodiment, a sulfide solid electrolyte having an argyrodite type crystal structure can be produced even under a low temperature condition of 150°C or higher and 360°C or lower.

A method for producing a sulfide solid electrolyte according to an eighth aspect of the present embodiment is the production method, in which the raw material inclusion contains lithium sulfide, phosphorus sulfide, and a lithium halide.

In the eighth aspect, a specific compound of lithium sulfide, phosphorus sulfide, and a lithium halide is used as the raw material inclusion in any one of the first to seventh aspects. By employing the raw material inclusion containing such compounds, the sulfide solid electrolyte can be produced more efficiently.

A method for producing a sulfide solid electrolyte according to a ninth aspect of the present embodiment is the production method, in which the sulfide solid electrolyte is a crystalline sulfide solid electrolyte having an argyrodite type crystal structure.

The ninth embodiment is a sulfide solid electrolyte obtained by the production method according to any one of the first to eighth aspects, in which the sulfide solid electrolyte has an argyrodite type crystal structure. As described above, the sulfide solid electrolyte having an argyrodite type crystal structure requires firing at a high temperature of about 400°C according to the conventional production method. However, according to the production method of the present embodiment, the heating temperature can be reduced to, for example, 150°C or higher and 360°C or lower. That is, when a sulfide solid electrolyte having an argyrodite type crystal structure is produced, the features of the production method of the present embodiment can be more effectively utilized.

A method for producing a sulfide solid electrolyte according to a tenth aspect of the present embodiment is the method for producing a sulfide solid electrolyte according to any one of the first to ninth aspects, in which the raw material inclusion contains a raw material sulfide solid electrolyte as a raw material.

A method for producing a sulfide solid electrolyte according to an eleventh aspect of the present embodiment is the method for producing a sulfide solid electrolyte according to the tenth aspect, further including: mixing and pulverizing a raw material inclusion B containing at least two kinds of compounds in a solvent to obtain a raw material mixture; and calcining the raw material mixture to obtain the raw material sulfide solid electrolyte.

A method for producing a sulfide solid electrolyte according to a twelfth aspect of the present embodiment is the method for producing a sulfide solid electrolyte according to the eleventh aspect, in which a heating temperature in the calcining is 150°C or higher and 300°C or lower.

[Obtaining a Mixture]

The production method of the present embodiment includes obtaining a mixture by mixing a raw material inclusion containing a lithium atom, a phosphorus atom, a sulfur atom, and a halogen atom in an organic solvent. Hereinafter, obtaining a mixture will be described from the raw material inclusion.

(Raw Material Inclusion)

The raw material inclusion contains a lithium atom, a phosphorus atom, a sulfur atom, and a halogen atom. The raw material inclusion is not particularly limited as long as it contains these atoms, and examples thereof include a compound containing at least one kind of atom selected from these atoms alone as a raw material or an inclusion containing a plurality of kinds of the compound. The raw material inclusion is preferably an inclusion containing two or more kinds of compounds selected from compounds containing at least one kind of atom selected from a lithium atom, a phosphorus atom, a sulfur atom, and a halogen atom. Therefore, the sulfide solid electrolyte obtained by the production method of the present embodiment contains a lithium atom, a phosphorus atom, a sulfur atom, and a halogen atom.

The compound that can be used as the raw material contains at least one of a lithium atom, a phosphorus atom, a sulfur atom, and a halogen atom. More specifically, representative examples include a raw material compound consisting of at least two elements selected from the above four elements, such as alkali metal sulfides such as lithium sulfide, sodium sulfide, potassium sulfide, rubidium sulfide, and cesium sulfide; alkali metal halides such as lithium halides such as lithium fluoride, lithium chloride, lithium bromide, and lithium iodide, and sodium halides such as sodium iodide, sodium fluoride, sodium chloride, and sodium bromide; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$

and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and preferably bromine ($Br_2$) and iodine ($I_2$).

Examples of compounds that can be used as raw materials other than the above include compounds containing at least one atom selected from the above four kinds of atoms and containing atoms other than the four kinds of atoms, more specifically, lithium compounds such as lithium oxide, lithium hydroxide, and lithium carbonate; metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

In the present embodiment, the halogen atom that can be used may vary depending on the sulfide solid electrolyte to be obtained, and therefore cannot be said unconditionally, but from the viewpoint of obtaining a sulfide solid electrolyte having higher ionic conductivity more easily, a chlorine atom, a bromine atom, and an iodine atom are preferable among the halogen atoms. In addition, these atoms may be used alone or in combination of a plurality of kinds.

In addition, for example, in the case of obtaining a sulfide solid electrolyte having a thio-LISICON Region II type crystal structure to be described later, a bromine atom and an iodine atom are more preferable, and in the case of obtaining a sulfide solid electrolyte having an argyrodite type crystal structure, a chlorine atom and a bromine atom are more preferable.

In the present embodiment, from the viewpoint of more easily obtaining a sulfide solid electrolyte having high ionic conductivity, as the compound that can be used as the raw material, among the above-described compounds, alkali metal sulfides such as lithium sulfide and sodium sulfide, phosphorus sulfides such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferable. Among alkali metal sulfides, lithium sulfide is preferable, and among phosphorus sulfides, diphosphorus pentasulfide is preferable.

As described above, the raw material containing a halogen atom can vary depending on the sulfide solid electrolyte to be obtained, and thus cannot be said to be unconditionally selected; however, among halogen simple substances, chlorine ($Cl_2$), bromine ($Br_2$), and iodine ($I_2$) are preferable, and among lithium halides, lithium chloride, lithium bromide, and lithium iodide are preferable. Further, in the case of obtaining a sulfide solid electrolyte having a thio-LISICON Region II type crystal structure, bromine ($Br_2$) and iodine ($I_2$) are more preferable as the halogen simple substance, and lithium bromide and lithium iodide are more preferable as the lithium halide. Furthermore, in the case of obtaining a sulfide solid electrolyte having an argyrodite type crystal structure, chlorine ($Cl_2$) and bromine ($Br_2$) are more preferable as the halogen simple substance, and lithium chloride and lithium bromide are more preferable as the lithium halide.

The combination of compounds that can be used as the raw material is preferably a combination of lithium sulfide, phosphorus sulfide, and a lithium halide, a combination of lithium sulfide, phosphorus sulfide, and a halogen simple substance, and more preferably a combination of lithium sulfide, phosphorus sulfide, and a lithium halide. Here, diphosphorus pentasulfide is preferable as phosphorus sulfide, and the lithium halide and the halogen simple substance may be selected according to a sulfide solid electrolyte to be obtained, as described above.

In addition, in the present embodiment, as the compound that can be used as the raw material, a sulfide solid electrolyte such as $Li_3PS_4$ containing a $PS_4$ unit is also preferably exemplified. By using a structure containing lithium such as $Li_3PS_4$ present as a main structure in the sulfide solid electrolyte obtained by the production method of the present embodiment as a raw material, it is possible to increase a constitutional ratio of the structure, that is, to improve a $PS_4$ fraction, and to obtain high ionic conductivity, compared to a case where the above-described compound such as lithium sulfide is used as a raw material and the sulfide solid electrolyte is formed while being synthesized by a reaction between the compounds.

In the present embodiment, preferable examples of the sulfide solid electrolyte (hereinafter, also referred to as a "raw material sulfide solid electrolyte") that can be employed in the compound used as the raw material include an amorphous sulfide solid electrolyte (also referred to as "amorphous $Li_3PS_4$") having a $Li_3PS_4$ structure as a molecular structure, and a crystalline sulfide solid electrolyte (also referred to as "crystalline $Li_3PS_4$"). In addition, as the "amorphous sulfide solid electrolyte", an amorphous sulfide solid electrolyte or a crystalline sulfide solid electrolyte having a structure containing a halogen atom, which will be described later, or a precursor (such as a "calcined product" described later) equivalent thereto can also be used.

In a case where the raw material inclusion contains the raw material sulfide solid electrolyte as the raw material, since higher Joule heating is obtained due to the ionic conductivity of the raw material sulfide solid electrolyte, the reaction is more easily promoted, the crystallinity of the obtained sulfide solid electrolyte is improved, and the sulfide solid electrolyte having higher ionic conductivity is more easily obtained.

In addition, in consideration of obtaining high ionic conductivity, as the raw material sulfide solid electrolyte, an amorphous or crystalline sulfide solid electrolyte not containing a $Li_4P_2S_7$ structure is preferable. As these raw material sulfide solid electrolytes, those produced by a conventionally existing production method such as a mechanical milling method, a slurry method, or a melt quenching method can be used, and commercially available products can also be used.

The sulfide solid electrolyte used as a raw material (raw material sulfide solid electrolyte) may be amorphous or crystalline, or may contain amorphous and crystalline sulfide solid electrolytes. In any case, in a case where a compound containing a halogen atom is used as the raw material, dispersibility of the halogen atom is improved, a bond between the halogen atom and a lithium atom, a sulfur atom, and a phosphorus atom in the solid electrolyte is easily generated, and as a result, a sulfide solid electrolyte having higher ionic conductivity can be obtained.

In the present embodiment, when lithium sulfide is used as a raw material, lithium sulfide is preferably particles.

The average particle diameter ($D_{50}$) of the lithium sulfide particles is preferably 10 $\mu m$ or more and 2000 $\mu m$ or less, more preferably 30 $\mu m$ or more and 1500 $\mu m$ or less, and still more preferably 50 $\mu m$ or more and 1000 $\mu m$ or less. In the description herein, the average particle diameter ($D_{50}$) is a particle diameter which reaches 50% of the whole by sequentially integrating particles from the smallest particle diameter when a particle size distribution integration curve is drawn, and the volume distribution is an average particle diameter which can be measured using, for example, a laser diffraction/scattering type particle size distribution measurement apparatus. In addition, among the raw materials exemplified above, it is preferable that the solid raw material has an average particle diameter similar to that of the lithium sulfide particles described above, that is, it is preferable that the solid raw material is within the same range as the average particle diameter of the lithium sulfide particles described above. The particle diameter of the compound as a raw material may be adjusted by pulverization, if necessary.

When lithium sulfide, diphosphorus pentasulfide, and a lithium halide are used as raw materials, the proportion of lithium sulfide to the total of lithium sulfide and diphosphorus pentasulfide can vary depending on the sulfide solid electrolyte to be obtained, and thus cannot be said to be definite; however, from the viewpoint of obtaining higher chemical stability and from the viewpoint of obtaining higher ionic conductivity, the proportion is preferably 60 mol% or more, more preferably 65 mol% or more, and still more preferably 68 mol% or more, and the upper limit thereof is preferably 85 mol% or less, more preferably 83 mol% or less, and still more preferably 80 mol% or less.

In a case where lithium sulfide, diphosphorus pentasulfide, a lithium halide, and other raw materials to be used as necessary are used, the content of lithium sulfide and diphosphorus pentasulfide with respect to the total of these raw materials is preferably 55 mol% or more, more preferably 58 mol% or more, and still more preferably 60 mol% or more, and the upper limit thereof is preferably 100 mol% or less, more preferably 90 mol% or less, still more preferably 80 mol% or less, and even more preferably 70 mol% or less.

When lithium bromide and lithium iodide are used in combination as the lithium halide, the proportion of lithium bromide with respect to the total of lithium bromide and lithium iodide is preferably 1 mol% or more, more preferably 20 mol% or more, still more preferably 40 mol% or more, and even more preferably 50 mol% or more, and the upper limit thereof is preferably 99 mol% or less, more preferably 90 mol% or less, still more preferably 80 mol% or less, and even more preferably 70 mol% or less, from the viewpoint of obtaining high ionic conductivity.

In addition, when lithium bromide and lithium chloride are used in combination as the lithium halide, the proportion of lithium bromide with respect to the total of lithium bromide and lithium chloride is the same as the proportion of lithium bromide with respect to the total of lithium bromide and lithium iodide described above.

[Organic Solvent]

In the production method of the present embodiment, the raw material inclusion is mixed in an organic solvent. As the solvent used in the mixing of the raw material inclusion, various solvents widely referred to as organic solvents can be used.

As the solvent, solvents that have been conventionally used in the production of solid electrolytes can be widely adopted, and examples thereof include hydrocarbon solvents such as aliphatic hydrocarbon solvents, alicyclic hydrocarbon solvents, and aromatic hydrocarbon solvents.

Examples of the aliphatic hydrocarbon include saturated aliphatic hydrocarbons such as pentane, hexane, 2-ethylhexane, heptane, octane, decane, undecane, dodecane, and tridecane, and unsaturated aliphatic hydrocarbons corresponding to the above-described saturated aliphatic hydrocarbons, such as pentene and hexene. Examples of the alicyclic hydrocarbon include saturated alicyclic hydrocarbons such as cyclohexane and methylcyclohexane, and unsaturated aliphatic hydrocarbons corresponding to the above-described saturated alicyclic hydrocarbons, such as cyclohexene and methylcyclohexene.

Examples of the aromatic hydrocarbon solvents include benzene, toluene, xylene, mesitylene, ethylbenzene, tert-butylbenzene, biphenyl, naphthalene, tetrahydronaphthalene (tetralin, cyclohexylbenzene), and anthracene.

Further, in addition to the above-described hydrocarbon solvent, a solvent containing a hetero atom such as an atom other than a carbon atom and a hydrogen atom, for example, a nitrogen atom, an oxygen atom, a sulfur atom, and a halogen atom is also exemplified.

Examples of the solvent containing an oxygen atom as a hetero atom include, in addition to an ether solvent and an ester solvent, an alcohol-based solvent, an aldehyde-based solvent, and a ketone-based solvent.

Preferred examples of the ether solvent include aliphatic ethers such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), in addition, diethylene glycol, and triethylene glycol; alicyclic ethers such as ethylene oxide, propylene oxide, tetrahydrofuran, tetrahydropyran, dimethoxytetrahydrofuran, cyclopentyl methyl ether, and dioxane; heterocyclic ethers such as furan, benzofuran, and benzopyran; and aromatic ethers such as methyl phenyl ether (anisole), ethyl phenyl ether, dibenzyl ether, and diphenyl ether (diphenyl oxide).

Preferred examples of the ester solvent include methyl formate, ethyl formate, methyl acetate, ethyl acetate, propyl acetate, and isopropyl acetate; aliphatic esters such as methyl propionate, ethyl propionate, dimethyl oxalate, diethyl oxalate, dimethyl malonate, diethyl malonate, dimethyl succinate, and diethyl succinate; alicyclic esters such as methyl cyclohexanecarboxylate, ethyl cyclohexanecarboxylate, and dimethyl cyclohexanedicarboxylate; heterocyclic esters such as methyl pyridinecarboxylate, methyl pyrimidincarboxylate, acetolactone, propiolactone, butyrolactone, and valerolactone; and aromatic esters such as methyl benzoate, ethyl benzoate, dimethyl phthalate, diethyl phthalate, butylbenzyl phthalate, dicyclohexyl phthalate, trimethyl trimellitate, and triethyl trimellitate.

In addition, alcohol-based solvents such as ethanol and butanol; aldehyde-based solvents such as formaldehyde, acetaldehyde, and dimethylformamide; and ketone-based solvents such as acetone and methyl ethyl ketone are preferably exemplified.

Examples of the solvent containing a nitrogen atom as a hetero atom include solvents having a group containing a nitrogen element, such as an amino group, an amide group, a nitro group, and a nitrile group.

Preferred examples of the solvent having an amino group (amine solvent) include aliphatic amines such as diethylamine, triethylamine, ethylenediamine, diaminopropane, dimethylethylenediamine, diethylethylenediamine, dimethyl diaminopropane, tetramethyldiamino methane, tetramethylethylenediamine (TMEDA), and tetramethyldiaminopropane (TMPDA); alicyclic amines such as cyclopropanediamine, cyclohexanediamine, and bisaminomethylcyclohexane; heterocyclic amines such as isophoronediamine, pyridine, methylpyridine, dimethylpyridine, methyl ethylpyridine, piperazine, dipiperidylpropane, and dimethylpiperazine; and aromatic amines such as phenyldiamine, tolylenediamine, naphthalenediamine, methylphenylenediamine, dimethylnaphthalenediamine, dimethylphenylenediamine, tetramethylphenylenediamine, tetramethylnaphthalenediamine, and dimethylaniline.

In addition, preferred examples of the solvent having a nitrile group (nitrile solvent) include acetonitrile, propionitrile, 3-chloropropionitrile, benzonitrile, 4-fluorobenzonitrile, tert-butyronitrile, isobutyronitrile, acrylonitrile, cyclohexyl nitrile, capronitrile, isocapronitrile, malononitrile, and fumaronitrile, and in addition, solvents containing a nitrogen atom, such as dimethylformamide and nitrobenzene are also preferably exemplified.

Preferred examples of the solvent containing a halogen atom as a hetero atom include dichloromethane, chlorobenzene, trifluoromethylbenzene, chlorobenzene, chlorotoluene, and bromobenzene.

Preferred examples of the solvent containing a sulfur atom include dimethyl sulfoxide and carbon disulfide.

The amount of the organic solvent used is such that the content of the whole raw material inclusion with respect to the total amount of the whole raw material inclusion and the organic solvent is preferably 1% by mass or more, more preferably 3% by mass or more, still more preferably 5% by mass or more, and even more preferably 8% by mass or more, and the upper limit thereof is preferably 20% by mass or less, more preferably 17% by mass or less, still more preferably 15% by mass or less, and even more preferably 12% by mass or less. When the amount of the organic solvent used is within the above range, the raw material inclusion is easily uniformly held in the organic solvent, and thus the raw material inclusion is easily selectively heated by microwave irradiation, and the sulfide solid electrolyte can be more efficiently produced.

(Dielectric Loss Factor and Boiling Point of Organic Solvent)

As the organic solvent used in the production method of the present embodiment, among the above-described organic solvents, those having a dielectric loss factor at 25°C of 10.0 or less are preferable. This is because by using an organic solvent having a dielectric loss factor of 10.0 or less, the raw material inclusion can be more selectively heated, and therefore, the sulfide solid electrolyte can be more efficiently produced. From such a viewpoint, the dielectric loss factor of the organic solvent is more preferably 8.0 or less, still more preferably 5.0 or less, even more preferably 1.0 or less, and particularly preferably 0.5 or less, and the lower limit thereof is not particularly limited, and is usually 0.01 or more.

The dielectric loss factor in the description herein is a dielectric loss factor at 25°C at 2.45 GHz, and is a measured value measured based on a conventional method. For example, the relative dielectric constant and the dielectric loss tangent can be measured using a dielectric constant measuring device (for example, various devices such as an LCR meter, an impedance material analyzer, a network analyzer, a TDR measurement device, and a pulse THz spectroscopy device), and the dielectric loss factor can be calculated.

As the organic solvent used in the production method of the present embodiment, among the above-described organic solvents, those having a boiling point of 50°C or higher are preferable. This is because when the boiling point is 50°C or higher, the volatilization amount of the organic solvent when the raw material inclusion is selectively heated can be suppressed, and the raw material inclusion can be more uniformly held in the organic solvent, so that the raw material inclusion can be easily selectively heated, and the amount of the organic solvent used can be reduced. From such a viewpoint, the boiling point of the organic solvent is more preferably 65°C or higher, still more preferably 75°C or higher, even more preferably 100°C or higher, and particularly preferably 200°C or higher.

Among the organic solvents exemplified above, an aromatic solvent having an aromatic ring, such as an aromatic hydrocarbon solvent, an aromatic ether solvent, and an aromatic ester solvent, an aliphatic hydrocarbon, an alicyclic hydrocarbon, an ether solvent (excluding the aromatic ether solvent), an ester solvent (excluding the aromatic ester solvent), a solvent having an amino group (amine solvent), and a solvent containing a halogen atom are more preferable, and among these, an aromatic solvent having an aromatic ring is particularly preferable. These organic solvents easily satisfy the conditions of the dielectric loss factor and the boiling point described above, and thus the raw material inclusion can be easily selectively heated, so that the sulfide solid electrolyte can be more efficiently produced.

As the aromatic solvent, an aromatic hydrocarbon solvent and an aromatic ether are preferable, and an aromatic ether is more preferable. As the aromatic hydrocarbon solvent, benzene, toluene, xylene, biphenyl, naphthalene, and tetrahydronaphthalene (tetralin and cyclohexylbenzene) are preferable, and as the aromatic ether, diphenyl ether (diphenyl oxide) is preferable.

As the aliphatic hydrocarbon, pentane and hexane are preferable, and as the alicyclic hydrocarbon, cyclohexane is preferable.

As the ether solvent (excluding the aromatic ether solvent), an aliphatic ether and an alicyclic ether are preferable, and among them, diethyl ether and tetrahydrofuran are preferable. The ester solvents (excluding the aromatic ester solvents) are preferably aliphatic esters, and among these, ethyl acetate is preferable.

As the solvent having an amino group (amine solvent), aliphatic amines and heterocyclic amines are preferable, and among them, triethylamine and pyridine are preferable.

The solvent containing a halogen atom is preferably dichloromethane.

[Mixing]

The production method of the present embodiment requires that the raw material inclusion is mixed in the organic solvent to obtain a mixture. The mixture becomes a slurry (suspension) in which the raw material inclusion is dispersed in the organic solvent. By mixing to form a mixture, the raw material inclusion can be more uniformly held in the organic solvent, and thus the raw material inclusion can be easily selectively heated, and the sulfide solid electrolyte can be efficiently produced.

The step of mixing the raw material inclusion in an organic solvent to obtain a mixture can be carried out using, for example, a mixer. Alternatively, the mixing can be performed using a stirrer or a pulverizer. This is because the mixing of the raw materials can occur even when the stirrer is used, and the pulverization of the raw materials occurs by the pulverizer, but the mixing also occurs at the same time. That is, it can also be said that the mixture can be obtained by subjecting the raw material inclusion to a treatment of stirring, mixing, pulverization, or a combination thereof in the organic solvent.

In the production method of the present embodiment, the mixing may be performed using any one of a stirrer, a mixer, and a pulverizer, but from the viewpoint of efficiently obtaining a slurry (suspension) in which the raw material inclusion is dispersed in the organic solvent, it is preferable to use any one of a stirrer and a mixer, and it is more preferable to use a mixer.

Examples of the stirrer and the mixer include a mechanical stirring type mixer which is provided with a stirring blade in a reaction tank and is capable of stirring (which can also be referred to as mixing by stirring or stirring and mixing). Examples of the mechanical stirring type mixer include a high-speed stirring type mixer and a double-arm type mixer. Examples of the high-speed stirring type mixer include a vertical axis rotation type mixer and a horizontal axis rotation type mixer, and either type of mixer may be used.

Examples of the shape of the stirring blade used in the mechanical stirring type mixer include a blade type, an arm type, an anchor type, a paddle type, a full-zone type, a ribbon type, a multi-stage blade type, a double-arm type, a shovel type, a twin-screw blade type, a flat blade type, and a C-blade type. From the viewpoint of more efficiently promoting the reaction of raw materials, a shovel type, a flat blade type, a C-blade type, an anchor type, a paddle type, and a full-zone type are preferable, and an anchor type, a paddle type, and a full-zone type are more preferable.

In a case where the mechanical stirring type mixer is used, the rotation speed of the stirring blade may be appropriately adjusted according to the capacity and temperature of the fluid in the reaction tank, and the shape of the stirring blade, and there is no particular limitation, but the rotation speed of the stirring blade may be usually set to about 5 rpm or more and 400 rpm or less. From the viewpoint of more efficiently promoting the reaction of raw materials, the rotation speed of the stirring blade is preferably 10 rpm or more and 300 rpm or less, more preferably 15 rpm or more and 250 rpm or less, and still more preferably 20 rpm or more and 200 rpm or less.

The temperature condition at the time of mixing using a mixer is not particularly limited, and is, for example, usually -30 to 120°C, preferably -10 to 100°C, more preferably 0 to 80°C, and still more preferably 10 to 60°C. The mixing time is usually 0.1 to 500 hours, and from the viewpoint of making the dispersion state of the raw materials more uniform and promoting the reaction, preferably 1 to 450 hours, more preferably 10 to 425 hours, still more preferably 20 to 400 hours, and even more preferably 40 to 375 hours.

As the pulverizer, for example, a media type mill using a pulverization medium can be used.

The media type mill is roughly classified into a container driving-type mill and a media agitating-type mill. Examples of the container driving-type mill include a ball mill and a bead mill equipped with a stirring tank, a pulverization tank, or a combination thereof. Examples of the media agitating-type mill include various pulverizers such as impact type pulverizers such as a cutter mill, a hammer mill, and a pin mill; tower type pulverizers such as a tower mill; stirring tank type pulverizers such as an attritor, an aquamizer, and a sand grinder; circulation tank type pulverizers such as a viscomill and a pearl mill; circulation tube type pulverizers; annular type pulverizers such as CoBall Mill; continuous dynamic type pulverizers; and single- or multi-screw kneaders. Among them, a ball mill and a bead mill exemplified as the container driving-type mill are preferable, and the planetary mill is more preferable, in consideration of easiness of adjustment of the particle diameter of the sulfide to be obtained.

These pulverizers can be appropriately selected according to a desired scale, and in the case of a relatively small scale, a container driving-type mill such as a ball mill or a bead mill can be used, and in the case of a large scale or mass production, a pulverizer of another type may be used.

In addition, as will be described later, in the case of a liquid state accompanied by a liquid such as a solvent at the time of mixing or a slurry state, a wet pulverizer capable of corresponding to wet pulverization is preferable.

Representative examples of the wet pulverizer include a wet bead mill, a wet ball mill, and a wet vibration mill, and a wet bead mill using beads as pulverization media is preferable from the viewpoint that the conditions of the pulverization operation can be freely adjusted and it is easy to correspond to those having a smaller particle diameter. In addition, it is also possible to use a dry pulverizer such as a dry media type mill such as a dry bead mill, a dry ball mill, or a dry vibration mill, or a dry non-media type mill such as a jet mill.

In addition, when the mixing object is in a liquid state or a slurry state, a circulation type pulverizer capable of performing circulation operation for circulating the mixture as necessary can also be used. Specific examples thereof include a pulverizer having a form in which the object is circulated between a pulverizer (pulverizing and mixing machine) for pulverizing the slurry and a temperature holding tank (reaction vessel).

The size of the beads and balls used in the ball mill and bead mill may be appropriately selected according to the desired particle diameter and throughput, and for example, the diameter of the beads is usually 0.05 mmcp or more, preferably 0.1 mmφ or more, and more preferably 0.3 mmφ or more, and the upper limit thereof is usually 5.0 mmcp or less, preferably 3.0 mmφ or less, and more preferably 2.0 mmφ or less. The diameter of the ball is usually 2.0 mmφ or more, preferably 2.5 mmφ or more, and more preferably 3.0 mmφ or more, and the upper limit thereof is usually 20.0 mmφ or less, preferably 15.0 mmφ or less, and more preferably 10.0 mmcp or less.

Examples of the material of the pulverizer include metals such as stainless steel, chromium steel, and tungsten carbide; ceramics such as zirconia and silicon nitride; and minerals such as agate.

In addition, in a case where a ball mill or a beads mill is used, the rotation speed changes depending on the scale of the treatment and cannot be said to be general, but the rotation speed is usually 10 rpm or more, preferably 20 rpm or more, and more preferably 50 rpm or more, and the upper limit thereof is usually 1,000 rpm or less, preferably 900 rpm or less, more preferably 800 rpm or less, and still more preferably 700 rpm or less.

The pulverization time in this case varies depending on the scale of the treatment and cannot be said to be general, but is usually 0.5 hours or more, preferably 1 hour or more, more preferably 5 hours or more, and still more preferably 10 hours or more, and the upper limit thereof is usually 100 hours or less, preferably 72 hours or less, more preferably 48 hours or less, and still more preferably 36 hours or less.

By selecting the size and material of the medium (beads, balls) to be used, the rotation speed of the rotor, and the time, it is possible to perform a treatment of mixing, stirring, pulverization, or a combination thereof, and it is possible to adjust the particle diameter of the obtained sulfide.

The content of the raw material inclusion contained in the mixture obtained by mixing is preferably 1% by mass or more, more preferably 3% by mass or more, still more preferably 5% by mass or more, and even more preferably 8% by mass or more, and the upper limit thereof is preferably 20% by mass or less, more preferably 17% by mass or less, still more preferably 15% by mass or less, and even more preferably 12% by mass or less. When the content of the raw material inclusion is within the above range, the raw material inclusion is easily uniformly held in the organic solvent, and thus the raw material inclusion is easily selectively heated by microwave irradiation, and the sulfide solid electrolyte can be more efficiently produced.

[Microwave Irradiation]

In the production method of the present embodiment, it is required to perform microwave irradiation on the mixture obtained by the mixing described above. By performing microwave irradiation on the mixture containing the raw material inclusion and the organic solvent, the raw material inclusion is selectively heated, and the sulfide solid electrolyte is obtained.

As a microwave generating apparatus for irradiation with microwaves, for example, an irradiation apparatus equipped with a high-frequency oscillator for oscillating microwaves can be used, and if the scale is small, a commercially available microwave oven can also be used.

The frequency of the microwave is not particularly limited as long as it is within a range of approximately 0.3 GHz or more and 3000 GHz or less. In consideration of more efficient heating of the raw material inclusion and ease of availability of a microwave generating apparatus, the frequency is preferably 0.5 GHz or more, more preferably 1.0 GHz or more, and still more preferably 1.5 GHz or more and the upper limit thereof is preferably 100 GHz or less, more preferably 10.0 GHz or less, and still more preferably 6.0 GHz or less.

The output may vary depending on the type of the organic solvent contained in the mixture to be subjected to microwave irradiation, and the amount of the mixture, and thus cannot be said to be general, but in consideration of heating the raw material inclusion more efficiently, the output is preferably 10 W or more, more preferably 50 W or more, and still more preferably 100 W or more, and the upper limit thereof is preferably 500 kW or less, more preferably 300 kW or less, and still more preferably 200 kW or less.

The microwave irradiation time may vary depending on the type of the organic solvent contained in the mixture to be subjected to microwave irradiation, and the amount of the mixture, and thus cannot be said to be general, but in consideration of heating the raw material inclusion more efficiently, the microwave irradiation time is preferably 1 minute or more, more preferably 2 minutes or more, and still more preferably 3 minutes or more, and the upper limit thereof is preferably 360 minutes or less, more preferably 300 minutes or less, and still more preferably 240 minutes or less.

In addition, regarding the heating temperature, the irradiation time for maintaining the temperature at the highest temperature is preferably 1 minute or more, more preferably 2 minutes or more, and still more preferably 3 minutes or more, and the upper limit thereof is preferably 240 minutes or less, more preferably 210 minutes or less, still more preferably 190 minutes or less, and even more preferably 180 minutes or less.

The heating temperature by microwave irradiation may vary depending on the composition of the sulfide solid electrolyte to be obtained, and whether an amorphous sulfide solid electrolyte or a crystalline sulfide solid electrolyte is to be obtained, and thus cannot be said to be general, but the temperature of the mixture is preferably 150°C or higher, more preferably 200°C or higher, and still more preferably 230°C or higher, and the upper limit thereof is preferably 360°C or lower, more preferably 350°C or lower, still more preferably 310°C or lower, and even more preferably 275°C or lower.

The heating temperature by microwave irradiation can be changed depending on the composition of the sulfide solid electrolyte to be obtained and whether it is amorphous or crystalline, as described above. That is, it is possible to control whether to obtain an amorphous sulfide solid electrolyte or a crystalline sulfide solid electrolyte by the heating temperature by microwave irradiation.

For example, the temperature required for crystallization of the obtained raw material sulfide solid electrolyte, that is, the amorphous sulfide solid electrolyte is subjected to differential thermal analysis (DTA) using a differential thermal analyzer (DTA device) under a temperature increase condition of 10°C/min, and the temperature of the peak top of the exothermic peak observed on the lowest temperature side is defined as the crystallization temperature. Then, when heating is performed such that the temperature of the raw material inclusion in the mixture obtained by the above-described mixing, which is a heating target by microwave irradiation, becomes a temperature higher than the crystallization temperature, a crystalline sulfide solid electrolyte is obtained, and when heating is performed such that the temperature becomes a temperature lower than the crystallization temperature, an amorphous sulfide solid electrolyte is obtained.

In the case of producing a crystalline sulfide solid electrolyte, from the viewpoint of obtaining the crystalline sulfide solid electrolyte more stably and efficiently, the temperature of the raw material inclusion may be set to be in the range of preferably 5°C or higher, more preferably 10°C or higher, and still more preferably 20°C or higher with respect to the crystallization temperature, and the upper limit thereof is not particularly limited, but may be set to be about 40°C or lower with respect to the crystallization temperature.

On the other hand, in the case of producing an amorphous sulfide solid electrolyte, from the viewpoint of obtaining the amorphous sulfide solid electrolyte more stably and efficiently, the temperature of the raw material inclusion may be set to be in the range of preferably 5°C or lower, more preferably 10°C or lower, and still more preferably 20°C or lower with respect to the crystallization temperature, and to be equal to or higher than the boiling point of the organic solvent contained in the mixture, and the lower limit thereof is not particularly limited as long as the lower limit thereof is equal to or higher than the boiling point of the organic solvent contained in the mixture, but may be set to be, for example, about -40°C or higher than the temperature of the peak top of the exothermic peak observed on the lowest temperature side.

In the production method of the present embodiment, since the raw material inclusion is selectively heated as described above, the temperature of the raw material inclusion itself is considered to be higher than the temperature of the organic solvent (considered to be the same as the temperature of the mixture). Therefore, in the production method of the present embodiment, the temperature of the mixture obtained by the above-described mixing can be grasped, but the temperature of the raw material inclusion in the mixture is indirectly grasped from the temperature of the mixture.

According to Examples to be described later, a sulfide solid electrolyte having an argyrodite type crystal structure is obtained by setting the temperature of the mixture to 250°C. Considering that the sulfide solid electrolyte having an argyrodite type crystal structure requires firing at a high temperature of about 400°C by a conventional method as described above, it can be considered that the temperature of the raw material inclusion itself is higher than the temperature of the mixture by about + 150°C. Strictly, it may vary depending on the type of the organic solvent in the mixture, and the content thereof, but it is preferable to determine whether or not the temperature of the raw material inclusion itself reaches the crystallization temperature as a guide around the temperature of the mixture + 150°C and to set the heating temperature.

In addition, when microwave irradiation is performed on the mixture, it is preferable to irradiate the mixture with a microwave having a high output of a certain level or more at an integrated irradiation energy of a certain level or more.

Specifically, the mixture is irradiated with microwaves at a high output of 140 W/g or more, and the integrated irradiation energy per unit mass of the raw material inclusion contained in the mixture during irradiation with microwaves at the high output is preferably 1.0 kW·s/g or more, more preferably 3.0 kW·s/g or more, and still more preferably 5.0 kW·s/g or more.

By irradiating the mixture with microwaves under the above conditions, the reaction between the solid electrolyte raw materials in the raw material inclusion is promoted, and the crystallinity and the ionic conductivity of the sulfide solid electrolyte to be obtained are improved.

[Drying]

The production method of the present embodiment may include drying the fluid obtained by performing the microwave irradiation. The obtained fluid contains the sulfide solid electrolyte produced by the microwave irradiation, and the remaining organic solvent, and is usually a slurry (suspension). Therefore, a powder of the sulfide solid electrolyte is obtained by drying the fluid.

Drying can be performed at a temperature of a fluid obtained by performing microwave irradiation on the mixture according to the type of the solvent.

In addition, drying can be performed by volatilizing the solvent by drying the fluid under reduced pressure (vacuum drying) using a vacuum pump usually at 5 to 200°C, preferably 10 to 180°C, and more preferably 15 to 160°C.

Drying may be performed by filtering the fluid using a glass filter, solid-liquid separation by decantation, or solid-liquid separation using a centrifugal separator.

Drying may be performed by any of the above-described reduced-pressure drying (vacuum drying), filtration, and solid-liquid separation, and for example, the reduced-pressure drying (vacuum drying) may be performed after the filtration and the solid-liquid separation are performed.

[Production of Raw Material Contained in Raw material inclusion]

As the raw materials contained in the raw material inclusion, as described above, sulfide solid electrolytes such as sulfide solid electrolytes (lithium thiophosphate) having a $Li_3PS_4$ structure as a molecular structure can be preferably used. Hereinafter, a method for producing a sulfide solid electrolyte (raw material sulfide solid electrolyte) used in the raw material inclusion will be described mainly for sulfide solid electrolyte (lithium thiophosphate) having a $Li_3PS_4$ structure as a molecular structure.

As described above, the raw material sulfide solid electrolyte can be produced by a conventionally existing production method such as a mechanical milling method, a slurry method, or a melt quenching method. Preferably, the raw material sulfide solid electrolyte can be produced by a production method including the steps of: mixing and pulverizing a raw material inclusion containing at least two compounds in a solvent to obtain a raw material mixture; and calcining the raw material mixture to obtain a calcined product.

(Raw Material Inclusion)

As the raw material inclusion containing at least two compounds (in order to distinguish from the raw material inclusion used in "[Obtaining a Mixture]" described above, hereinafter, the raw material inclusion used in "[Obtaining a Mixture]" is referred to as "raw material inclusion A", and the raw material inclusion used in "[Production of Raw Material Contained in Raw material inclusion]" is referred to as "raw material inclusion B"), a raw material inclusion B containing lithium sulfide and phosphorus sulfide, which are compounds to be raw materials, is preferably used, and diphosphorus pentasulfide is preferable as phosphorus sulfide. The amounts of lithium sulfide and phosphorus sulfide to be used may be appropriately determined according to the sulfide solid electrolyte to be obtained, and when a sulfide solid electrolyte having a $Li_3PS_4$ structure is to be obtained using lithium sulfide and diphosphorus pentasulfide, they may be used so as to have a molar ratio of 3:1.

In addition, when another sulfide solid electrolyte is to be obtained, they may be used at a molar ratio corresponding to the sulfide solid electrolyte, and when a sulfide solid electrolyte containing a halogen atom is to be obtained, a compound serving as a raw material containing a halogen atom corresponding thereto may be used. The molar ratio corresponding to the sulfide solid electrolyte, and the compound serving as a raw material to be used are the same as those described for the raw material inclusion A described above.

The compound contained in the raw material inclusion B may be pulverized in advance. The pulverization may be performed using the pulverizer described as a pulverizer that can be used in obtaining the mixture described above, and for example, a pin mill, particularly a pin mill having a quantitative feeder is preferably used.

(Mixing and Pulverizing)

The production method of the raw material sulfide solid electrolyte includes mixing and pulverizing a raw material inclusion B containing at least two compounds in a solvent to obtain a raw material mixture. For example, phosphorus sulfide and diphosphorus pentasulfide that can be contained in the raw material inclusion B are pulverized in advance as necessary, weighed in an amount corresponding to the desired raw material sulfide solid electrolyte, and coarsely mixed to obtain a raw material inclusion B. The raw material inclusion B is then mixed and pulverized in a solvent to obtain a raw material mixture.

The raw material mixture contains compounds which are raw materials contained in the raw material inclusion B, and it is considered that these compounds mainly form fine crystals. This is because the compound contained in the raw material inclusion B is atomized by mixing and pulverizing the compounds which are raw materials. Further, it is considered that a part of the compounds which are raw materials reacts to form a raw material sulfide solid electrolyte.

For the mixing and pulverization of the raw material inclusion B, the pulverizer described as one that can be used for obtaining the mixture described above may be used, and a media type mill such as a ball mill or a bead mill is preferable. In addition, a kneader such as a single-screw or multi-screw kneader can also be used.

As the solvent used in the mixing and pulverizing, an organic solvent is preferably used. The organic solvent may be appropriately selected from organic solvents used in obtaining the above mixture.

Among the organic solvents described above, hydrocarbon solvents such as aliphatic hydrocarbon solvents, alicyclic hydrocarbon solvents, and aromatic hydrocarbon solvents are preferable, aromatic hydrocarbon solvents are more preferable, and toluene and xylene are particularly preferable.

In addition, as the solvent used in the mixing and pulverizing, the solvents containing hetero atoms are also preferably used, and the solvents containing hetero atoms are more preferably used in combination with the hydrocarbon solvents.

Among the solvents containing hetero atoms, a solvent containing an oxygen atom and a solvent containing a nitrogen atom are preferable, an ether solvent is preferable as the solvent containing an oxygen atom, a solvent containing a nitrile group (nitrile solvent) is preferable as the solvent containing a nitrogen atom, and a solvent containing a nitrile group (nitrile solvent) is more preferable. As the ether solvent, tetrahydrofuran and diethyl ether are preferable, and as the nitrile solvent, propionitrile, isocapronitrile, and isobutyronitrile are preferable.

As the solvent used in the mixing and pulverizing, it is preferable to use a combination of the hydrocarbon solvent and the solvent containing a hetero atom. In this case, the content of the solvent containing a hetero atom with respect to the total amount of the solvent is preferably 0.01% by mass or more, more preferably 0.1% by mass or more, and still more preferably 0.3% by mass or more, and the upper limit thereof is preferably 5% by mass or less, more preferably 3% by mass or less, and still more preferably 1% by mass or less.

The raw material inclusion B to be mixed and pulverized and the solvent usually form a slurry (suspension). The content of the raw material inclusion B in the slurry to be mixed and pulverized may be appropriately selected from the range of the content of the raw material inclusion A in the mixture in obtaining the above mixture.

(Calcining)

The production method of the raw material sulfide solid electrolyte includes mixing and pulverizing the raw material inclusion B to obtain a raw material mixture, and calcining the raw material mixture to obtain a calcined product. By calcining, the reaction of the compounds as raw materials contained in the raw material mixture is promoted to produce a raw material sulfide solid electrolyte, and the solvent is removed, so that a powdery raw material sulfide solid electrolyte is obtained. That is, the calcined product obtained by calcining becomes a raw material sulfide solid electrolyte.

The method of calcination is not particularly limited, and examples thereof include a method using a hot plate, an autoclave, a vacuum heating device, an argon gas atmosphere furnace, and a firing furnace. In addition, a method using a shear-type dryer such as an FM mixer or a Nauta mixer, a static-type furnace such as a hearth kiln, or a rotary-type furnace such as a rotary kiln may be used, and further, a horizontal dryer having a heating means and a feeding mechanism, or a horizontal vibrating fluidized dryer may be used industrially. The method of calcination may be selected according to the amount of treatment by calcination.

The heating temperature and time in the calcination may vary depending on the composition of the calcined product and whether an amorphous calcined product or a crystalline calcined product is to be obtained, and thus cannot be said to be general, but for example, the heating temperature is preferably 150°C or higher, more preferably 160°C or higher, and still more preferably 170°C or higher, and the upper limit thereof is preferably 300°C or lower, more preferably 280°C or lower, and still more preferably 250°C or lower.

As described above, the raw material sulfide solid electrolyte may be either amorphous or crystalline, but is preferably amorphous from the viewpoint of improving dispersibility of halogen atoms to easily cause bonding between halogen atoms and lithium atoms, sulfur atoms, and phosphorus atoms in the sulfide solid electrolyte to obtain a sulfide solid electrolyte having higher ionic conductivity.

Therefore, the heating temperature in the calcination is preferably a temperature at which an amorphous raw material sulfide solid electrolyte is obtained, and may be determined by the method described for the heating temperature by the microwave irradiation as a starting point of the crystallization temperature.

The heating time is preferably 0.1 hours or more, more preferably 0.2 hours or more, and still more preferably 0.25 hours or more, and the upper limit thereof is preferably 8 hours or less, more preferably 6 hours or less, and still more preferably 4 hours or less.

Calcining is preferably performed in an inert gas atmosphere (for example, a nitrogen atmosphere or an argon atmosphere) or a reduced pressure atmosphere (in particular, a vacuum). Further, an inert gas atmosphere containing hydrogen gas may be used. This is because deterioration (for example, oxidation) of the raw material sulfide solid electrolyte can be prevented.

Further, drying may be performed before calcining. By drying, the solvent contained in the raw material mixture can be removed in advance. The drying method may be the same as the drying of the fluid obtained by performing the microwave irradiation described above.

The raw material sulfide solid electrolyte obtained by the above-described production method are assumed to be sulfide solid electrolyte (lithium thiophosphate) having a $Li_3PS_4$ structure as the main molecular structure, but it goes without saying that sulfide solid electrolyte corresponding to the blending ratio (molar ratio) of the raw materials used in the raw material inclusion B, or, for example, in the case of using a compound serving as a raw material containing a halogen atom, can be obtained.

In the case of a sulfide solid electrolyte (lithium thiophosphate) having a $Li_3PS_4$ structure as a molecular structure, when calcined at the above-described preferred heating temperature, an amorphous sulfide solid electrolyte is obtained.

Further, for example, when a blending ratio at which a sulfide solid electrolyte having an argyrodite type crystal structure to be described later is obtained is adopted as the blending ratio of the raw materials, the calcined product is merely an intermediate product, and the details thereof are unknown because the state can be changed depending on the conditions of microwave irradiation, but it is considered that the calcined product is a precursor for producing a sulfide solid electrolyte having an argyrodite type crystal structure by microwave irradiation.

[Sulfide Solid Electrolyte]

The sulfide solid electrolyte obtained by the production method of the present embodiment is any of an amorphous sulfide solid electrolyte (glass component) and a crystalline sulfide solid electrolyte. Whether the sulfide solid electrolyte is amorphous or crystalline can be adjusted by the heating temperature by the microwave irradiation.

(Amorphous Sulfide Solid Electrolyte)

The amorphous sulfide solid electrolyte obtained by the production method of the present embodiment contains a lithium atom, a sulfur atom, a phosphorus atom, and a halogen atom, and typical examples thereof preferably include sulfide solid electrolytes composed of lithium sulfide, phosphorus sulfide, and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$; and sulfide solid electrolytes containing other atoms such as an oxygen atom and a silicon atom, such as $Li_2S-P_2S_5-Li_2O-LiI$ and $Li_2S-SiS_2-P_2S_5-LiI$. From the viewpoint of obtaining higher ionic conductivity, solid electrolytes composed of lithium sulfide, phosphorus sulfide, and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$, are preferably exemplified.

The types of elements constituting the amorphous sulfide solid electrolyte can be confirmed by, for example, an ICP emission spectrophotometer.

The shape of the amorphous sulfide solid electrolyte is not particularly limited, and examples thereof include a particle shape. The average particle diameter ($D_{50}$) of the particulate amorphous sulfide solid electrolyte may be, for example, in the range of 0.01 $\mu$m to 500 $\mu$m or 0.1 $\mu$m to 200 $\mu$m.

(Crystalline Sulfide Solid Electrolyte)

The crystalline sulfide solid electrolyte obtained by the production method of the present embodiment may be a so-called glass ceramic obtained by heating an amorphous solid electrolyte to a crystallization temperature or higher, and examples of its crystal structure include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of $2\theta = 20.2°$ and in the vicinity of 23.6° in X-ray diffraction measurement using CuK$\alpha$ line (for example, JP 2013-16423 A). In addition, as the crystalline sulfide solid electrolyte obtained by the production method of the present embodiment, from the viewpoint of obtaining higher ionic conductivity, the following argyrodite type crystal structure and thio-LISICON Region II type crystal structure are preferably exemplified.

The crystal structure represented by the composition formulae $Li_{7-x}P_{1-y}Si_yS_6$ and $Li_{7+x}P_{1-y}Si_yS_6$ (x is -0.6 to 0.6 and y is 0.1 to 0.6), which has the structural skeleton of $Li_7PS_6$ and is obtained by substituting a part of P with Si, is cubic or orthorhombic, preferably cubic, and has peaks mainly appearing at positions of $2\theta = 15.5°$, 18.0°, 25.0°, 30.0°, 31.4°, 45.3°, 47.0°, and 52.0° in X-ray diffraction measurement using CuK$\alpha$ line. The crystal structure represented by the composition formula $Li_{7-x-2y}PS_{6-x-y}Cl_x$ ($0.8 \leq x \leq 1.7$, $0 < y \leq -0.25x + 0.5$) is preferably a cubic crystal, and has peaks mainly appearing at positions of $2\theta = 15.5°$, 18.0°, 25.0°, 30.0°, 31.4°, 45.3°, 47.0°, and 52.0° in X-ray diffraction measurement using CuK$\alpha$ line. Further, the crystal structure represented by the composition formula $Li_{7-x}PS_{6-x}Ha_x$ (Ha is Cl or Br, and x is preferably 0.2 to 1.8) is preferably a cubic crystal, and has peaks mainly appearing at positions of $2\theta = 15.5°$, 18.0°, 25.0°, 30.0°, 31.4°, 45.3°, 47.0°, and 52.0° in X-ray diffraction measurement using CuK$\alpha$ line. These crystal structures basically having the structural skeleton of $Li_7PS_6$ are also referred to as argyrodite type crystal structures.

Note that these peak positions may be shifted back and forth within a range of $\pm 0.5°$.

In addition, a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725) can also be exemplified.

In the description herein, the term "thio-LISICON Region II type crystal structure" refers to either a $Li_{4-x}Ge_{1-x}P_xS_4$ system thio-LISICON Region II type crystal structure or a crystal structure similar to a $Li_{4-x}Ge_{1-x}P_xS_4$ system thio-LISICON Region II type crystal structure. In addition, the crystalline sulfide solid electrolyte obtained by the production method of the present embodiment may have the thio-LISICON Region II type crystal structure or may have the thio-LISICON Region II type crystal structure as a main crystal, but from the viewpoint of obtaining higher ionic conductivity, it is preferable that the crystalline sulfide solid electrolyte has the thio-LISICON Region II type crystal structure as a main crystal. In the description herein, "having as a main crystal" means that the proportion of the target crystal structure in the crystal structure is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ ($\beta$-$Li_3PS_4$).

In the X-ray diffraction measurement using $CuK\alpha$ line, the diffracted peak of the $Li_3PS_4$ crystal structure appears, for example, in the vicinity of $2\theta =$ 17.5°, 18.3°, 26.1°, 27.3°, and 30.0°, the diffracted peak of the $Li_4P_2S_6$ crystal structure appears, for example, in the vicinity of $2\theta =$ 16.9°, 27.1°, and 32.5°, the diffraction peak of the $Li_7PS_6$ crystal structure appears, for example, in the vicinity of $2\theta =$ 15.3°, 25.2°, 29.6°, and 31.0°, the diffraction peak of the $Li_7P_3S_{11}$ crystal structure appears, for example, in the vicinity of $2\theta =$ 17.8°, 18.5°, 19.7°, 21.8°, 23.7°, 25.9°, 29.6°, and 30.0°, the diffraction peak of the $Li_{4-x}Ge_{1-x}P_xS_4$ system thio-LISICON Region II type crystal structure appears, for example, in the vicinity of $2\theta =$ 20.1°, 23.9°, and 29.5°, and the diffraction peak of the crystal structure similar to the $Li_{4-x}Ge_{1-x}P_xS_4$ system thio-LISICON Region II type appears, for example, in the vicinity of $2\theta =$ 20.2 and 23.6°. Note that these peak positions may be shifted back and forth within a range of ±0.5°.

As described above, when the thio-LISICON Region II type crystal structure is obtained in the present embodiment, it is preferable that the crystalline $Li_3PS_4$ ($\beta$-$Li_3PS_4$) is not contained. The sulfide solid electrolytes obtained by the production method of the present embodiment do not have the diffraction peaks at $2\theta =$ 17.5° and 26.1° which are observed in the crystalline $Li_3PS_4$, or even if they have the diffraction peaks, the extremely small peaks are detected as compared with the diffraction peaks of the thio-LISICON Region II type crystal structure.

The shape of the crystalline sulfide solid electrolyte is not particularly limited, and examples thereof include a particle shape. The average particle diameter ($D_{50}$) of the particulate crystalline sulfide solid electrolyte may be, for example, in the range of 0.01 $\mu$m to 500 $\mu$m or 0.1 $\mu$m to 200 $\mu$m.

(Use of Sulfide Solid Electrolyte)

The sulfide solid electrolyte obtained by the production method of the present embodiment has high ionic conductivity and excellent battery performance, and thus is suitably used for a battery. The sulfide solid electrolyte obtained by the production method of the present embodiment may be used for any of a positive electrode layer, a negative electrode layer, and an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, or Cu, with Au can be used.

Examples

Next, the present invention will be specifically described with reference to Examples, but the present invention is not limited to these Examples.

(Preparation Example 1: Preparation of Raw Material Sulfide Solid Electrolyte)

Lithium sulfide ($Li_2S$) was pulverized using a pin mill ("100UPZ (model number)", manufactured by HOSOKAWA MICRON CORPORATION) having a quantitative feeder in a nitrogen atmosphere (charging speed: 80 g/min, rotational speed of disk: 18000 rpm).

Diphosphorus pentasulfide ($P_2S_5$, manufactured by Italmatch Japan Ltd.), lithium bromide (LiBr, manufactured by The Honjo Chemical Corporation), and lithium chloride (LiCl, manufactured by The Honjo Chemical Corporation) were also pulverized using the pin mill. Here, the charging speed of diphosphorus pentasulfide ($P_2S_5$) was 140 g/min, the charging speed of lithium bromide (LiBr) was 230 g/min, the charging speed of lithium chloride (LiCl) was 250 g/min, and the rotational speed of the disk was 18000 rpm in all cases.

Next, in a glove box under a nitrogen atmosphere, the respective compounds pulverized as described above were weighed so as to have a molar ratio of $Li_2S$:$P_2S_5$:LiBr:LiCl = 47.5: 12.5: 15.0:25.0 and to have a total 110 g, charged into a glass vessel, and roughly mixed by shaking the vessel. 110 g of the coarsely mixed raw material was dispersed in a mixed solvent of 720 mL of dehydrated toluene (manufactured by FUJIFILM Wako Pure Chemical Corporation) and 2.9 mL of dehydrated isobutyronitrile (manufactured by Kishida Chemical Co., Ltd.) (2 wt% with respect to the raw material) in a nitrogen atmosphere to obtain a slurry of about 10% by mass. The slurry was mixed and pulverized using a bead mill (LMZ015, manufactured by Ashizawa Finetech Ltd.) while maintaining a nitrogen atmosphere. Specifically, 456 g of zirconia beads having a diameter of 0.5 mm were used as a pulverization medium, the beads mill was operated under conditions of a circumferential speed of 12 m/s and a flow rate of 500 mL/min, the slurry was charged into the mill, and a circulating operation was performed for 1 hour to obtain a mixture of raw materials.

The mixture 400 mL of the raw materials obtained above was charged into an autoclave (capacity: 500 mL, made of SUS316) equipped with a stirrer and an oil bath for heating, and heated at 200°C for 2 hours while stirring at a rotational speed of 350 rpm. After the treatment, the mixture was dried under reduced pressure to distill off the solvent, thereby obtaining a calcined product.

(Example 1)

The raw material sulfide solid electrolyte obtained in Preparation Example 1 was used as a raw material inclusion.

1.5 g of the raw material sulfide solid electrolyte obtained in Preparation Example 1 was mixed in 13.5 g of a solvent containing biphenyl and diphenyl oxide as organic solvents ("DAWTHERM A Heating Medium (trade name)", manufactured by Dow Chemical Japan Limited, biphenyl content: 27% by mass), thereby obtaining a mixture (slurry concentration: 10% by mass).

The obtained mixture was placed in a microwave irradiation apparatus ("Initiator+ (model number)", manufactured by Biotage), microwave irradiation (frequency: 2.45 GHz) was started, the temperature of the mixture was held for 30 minutes while being held at 250°C, and microwave irradiation was stopped. The solvent of the obtained mixture was replaced with toluene under vacuum, and the mixture was dried at room temperature until the solvent disappeared, and then dried at 180°C for 4 hours to obtain a powder of a sulfide solid electrolyte.

When the mixture was irradiated with microwaves, the integrated irradiation energy was 78 kW·s/g during the irradiation with microwaves at an output of 140 W/g or more per unit mass of the raw material inclusion.

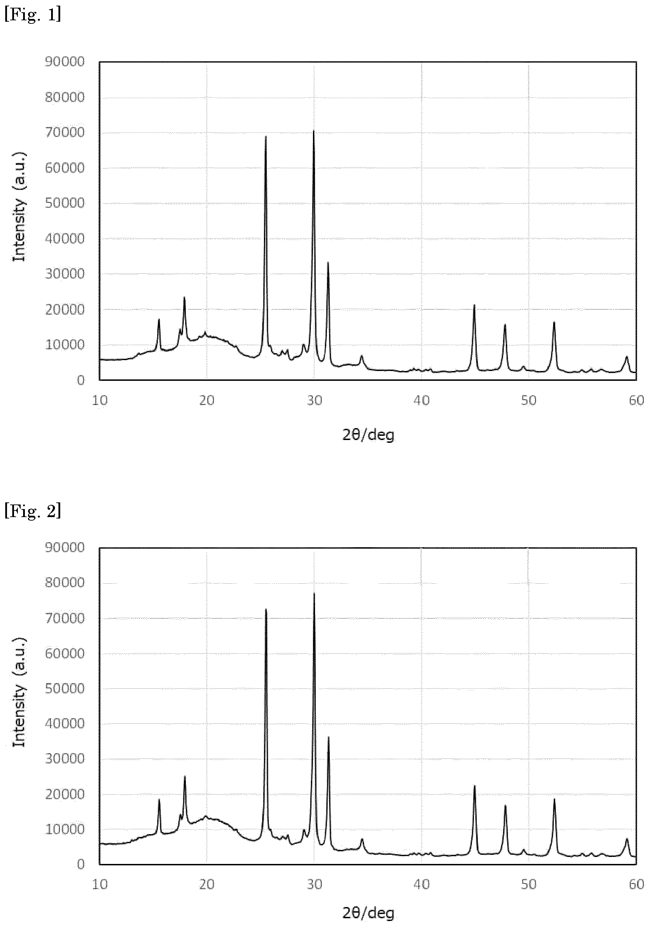

The obtained powder of the sulfide solid electrolyte was subjected to powder XRD diffraction measurement by the following method. The results are shown in Fig. 1. From Fig. 1, diffraction peaks at $2\theta$ = 15.5°, 18.0°, 25.0°, 30.0°, 31.4°, 45.3°, 47.0°, and 52.0° derived from the argyrodite type crystal structure were confirmed.

The ionic conductivity was measured by the following method and found to be 1.2 mS/cm.

In addition, the average particle diameter was measured by the following method, and the average particle diameter was 3.5 $\mu$m ($D_{50}$), which was substantially the same as 3.4 $\mu$m ($D_{50}$) of the average particle diameter of $Li_3PS_4$ used as a raw material.

(Measurement of Ionic Conductivity)

In the present examples, the ionic conductivity was measured as follows.

Circular pellets having diameters 10 mm (cross-sectional area S: 0.785 cm$^2$) and heights (L) of 0.1 to 0.3 cm were molded from the sulfide solid electrolytes to obtain samples. Electrode terminals were taken from the top and bottom of the sample, and measured by an AC impedance method at 25°C (frequency range: 1 MHz to 100 Hz, amplitude: 10 mV), and a Cole-Cole plot was obtained. The real part Z' ($\Omega$) at the point where -Z" ($\Omega$) becomes minimum in the vicinity of the right end of the arc observed in the high-frequency side region was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

(Powder X-ray Diffraction (XRD) Measurement)

In the description herein, powder X-ray diffraction (XRD) measurement was carried out as follows.

Each of the powders obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.

> Measuring apparatus: M03xhf (model number, manufactured by Mac Science Co., Ltd.)
> Tube voltage: 40 kV
> Tube current: 40 mA
> X-ray wavelength: Cu-K$\alpha$ line (1.5418 Å)
> Optical system: concentration method
> Slit configuration: divergent slit 0.5°, scattering slit 0.5°, light receiving slit 0.3 mm, use of monochromator
> Detector: semiconductor detector
> Measurement range: $2\theta$ = 10 to 60 deg
> Step width, Scan speed: 0.05 deg, 10 seconds/step

(Average Particle Diameter)

In the description herein, the average particle diameter was measured as follows.

For the powders obtained in Examples and Comparative Examples, the particle diameter ($D_{50}$) at a cumulative volume percentage of 50% was measured using a laser diffraction type particle size distribution measuring apparatus ("LA-950 (trade name)", manufactured by HORIBA, Ltd.) and taken as the average particle diameter.

(Examples 2 and 3)

As Example 2, a sulfide solid electrolyte of Example 2 was obtained in the same manner as in Example 1 except that the time for maintaining the temperature of the mixture at 250°C in Example 1 was set to 60 minutes.

As Example 3, a sulfide solid electrolyte of Example 3 was obtained in the same manner as in Example 1 except that the slurry concentration of the mixture was changed from 10% by mass to 5% by mass and the time for maintaining the temperature at 250°C in Example 1 was set to 180 minutes.

In addition, in Example 2, when the mixture was irradiated with microwaves, the integrated irradiation energy was 107 kW s/g during the irradiation with microwaves at an output of 140 W/g or more per unit mass of the raw material inclusion. In addition, the integrated irradiation energy in Example 3 was 175 kW·s/g.

The obtained sulfide solid electrolyte was subjected to the measurement of ionic conductivity, powder X-ray diffraction (XRD), and average particle diameter by the above-described methods.

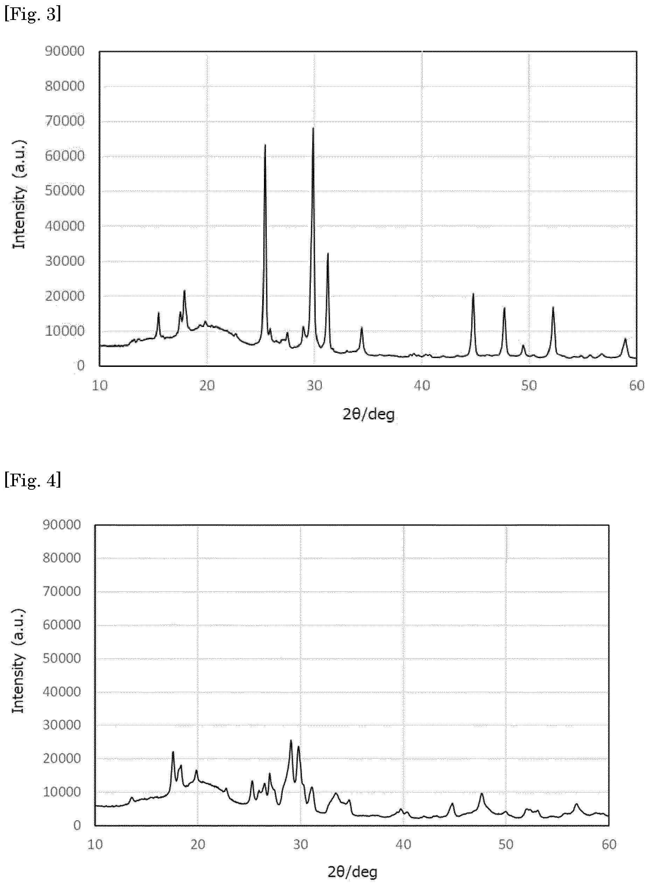

The results of powder X-ray diffraction (XRD) of the sulfide solid electrolytes obtained in Examples 2 and 3 are shown in Figs. 2 and 3, respectively. As shown in these figures, it was confirmed that the sulfide solid electrolytes obtained in Examples 2 and 3 also had diffraction peaks at $2\theta$ = 15.5°, 18.0°, 25.0°, 30.0°, 31.4°, 45.3°, 47.0°, and 52.0° derived from the argyrodite type crystal structure, similarly to the sulfide solid electrolyte of Example 1.

The ionic conductivities of these Examples were 1.9 mS/cm and 1.3 mS/cm, respectively.

In addition, the average particle diameters were 3.7 $\mu$m ($D_{50}$) and 3.2 $\mu$m ($D_{50}$), respectively, which were substantially the same as the average particle diameter of 3.4 $\mu$m ($D_{50}$) of $Li_3PS_4$ used as a raw material.

(Comparative Examples 1 and 2)

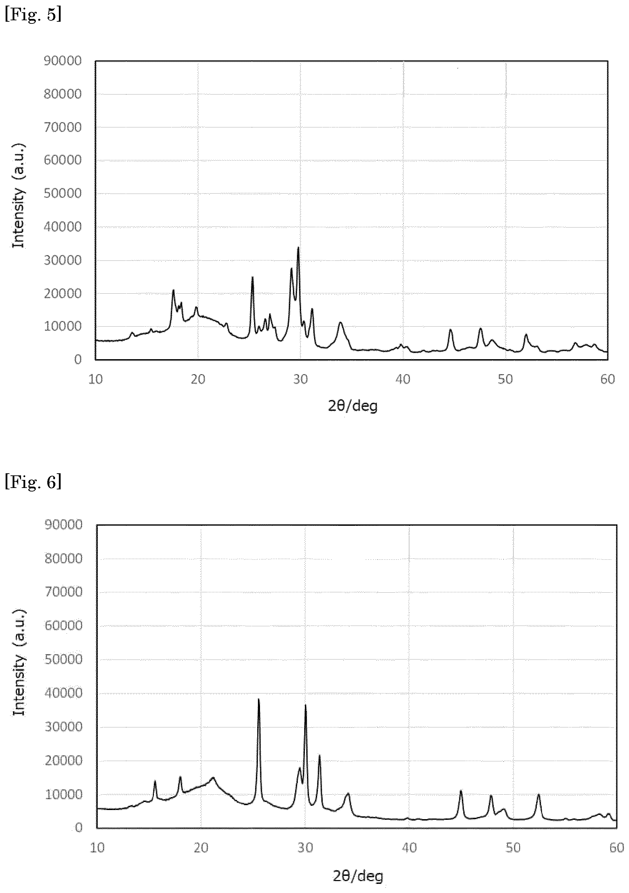

The raw material inclusion in Example 1 was mixed without using an organic solvent, and the mixture was left to stand for 30 minutes or 60 minutes in a furnace at 250°C, and then taken out from the furnace to obtain powders of Comparative Examples 1 and 2. The obtained powders were subjected to powder XRD diffraction measurement. The results are shown in Figs. 4 and 5.

As shown in these figures, in the powders obtained in Comparative Examples 1 and 2, the diffraction peak derived from the argyrodite type crystal structure, which was confirmed in the powders obtained in the above Examples, was not confirmed.

(Comparative Example 3)

In Comparative Example 1, a powder was obtained in the same manner as in Comparative Example 1 except that the powder was left to stand in a furnace at 300°C for 10 minutes. The obtained powders were subjected to powder XRD diffraction measurement. The results are shown in Fig. 6.

As shown in Fig. 6, in the powder obtained in Comparative Example 3, the diffraction peak derived from the argyrodite type crystal structure, which was confirmed in the powders obtained in the above Examples, was not confirmed.

(Comparative Example 4)

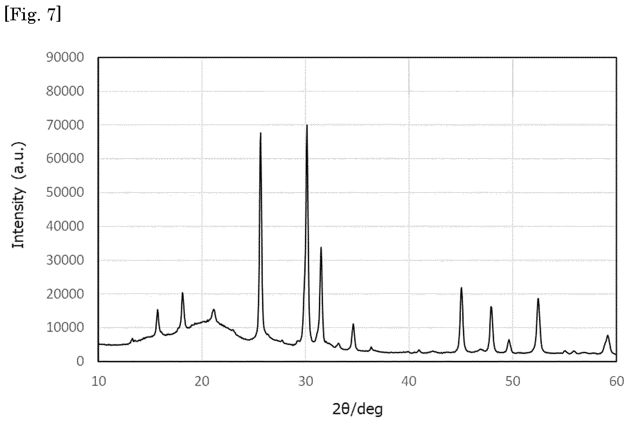

In Comparative Example 1, a powder was obtained in the same manner as in Comparative Example 1 except that the powder was left to stand in a furnace at 320°C for 60 minutes. The obtained powders were subjected to powder XRD diffraction measurement. The results are shown in Fig. 7.

As shown in Fig. 7, in the powder obtained in Comparative Example 4, the diffraction peak derived from the argyrodite type crystal structure, which was confirmed in the powders obtained in the above Examples, was not confirmed.

(Reference Example)

In the above Example 1, microwave irradiation (frequency: 2.45 GHz) was performed under the same conditions as in Example 1 except that only the organic solvent was disposed in the microwave irradiation apparatus. As a result, heating to 140°C was confirmed.

Considering that the temperature of the mixture (slurry) containing the raw material inclusion and the organic solvent was 250°C in Example 1, it is found that the raw material inclusion is preferentially heated by microwave irradiation.

(Example 4)

A powder of sulfide solid electrolytes was obtained in the same manner as in Example 1, except that the mixture was irradiated with microwaves at an output of 300 W for 465 seconds, and then intermittently irradiated with microwaves at an output of 200 W or less in order to maintain the temperature of the mixture at 250°C. The integrated irradiation energy per 1 g of the raw material inclusion contained in the mixture during irradiation with microwaves at an output of 140 W/g or more was 93 kW·s/g.

When the ionic conductivity of the obtained sulfide solid electrolyte powder was measured in the same manner as in Example 1, it was 0.35 mS/cm, and the average particle diameter was 2.28 $\mu$m ($D_{50}$).

(Example 5)

A powder of sulfide solid electrolytes was obtained in the same manner as in Example 1, except that the mixture was irradiated with microwaves at an output of 400 W for 401 seconds, and then intermittently irradiated with microwaves at an output of 200 W or less in order to maintain the temperature of the mixture at 250°C. The integrated irradiation energy per 1 g of the raw material inclusion contained in the mixture during irradiation with microwaves at an output of 140 W/g or more was 107 kW·s/g.

When the ionic conductivity of the obtained sulfide solid electrolyte powder was measured in the same manner as in Example 1, it was 1.9 mS/cm, and the average particle diameter was 3.68 $\mu$m ($D_{50}$).

(Example 6)

A powder of sulfide solid electrolytes was obtained in the same manner as in Example 1, except that the mixture was irradiated with microwaves at an output of 300W for a total of 1089 seconds in two portions, and then intermittently irradiated with microwaves at an output of 200W or less in order to maintain the temperature of the mixture at 250°C. The integrated irradiation energy per 1 g of the raw material inclusion contained in the mixture was 218 kW·s/g.

When the ionic conductivity of the obtained sulfide solid electrolyte powder was measured in the same manner as in Example 1, it was 1.4 mS/cm, and the average particle diameter was 2.54 $\mu$m ($D_{50}$).

Industrial Applicability

According to the production method of the present embodiment, it is possible to efficiently produce a sulfide solid electrolyte in which a liquid phase method is employed, a heating temperature is reduced, and granulation due to heating is suppressed to maintain a particle size. The sulfide solid electrolytes obtained by the production method of the present embodiment are suitably used for batteries, in particular, batteries used for information-related devices such as personal computers, video cameras, and mobile phones, and communication devices.

**Claims**

1. A method for producing a sulfide solid electrolyte, comprising: obtaining a mixture by mixing a raw material inclusion containing a lithium atom, a phosphorus atom, a sulfur atom, and a halogen atom in an organic solvent; and performing microwave irradiation on the mixture.

2. The method for producing a sulfide solid electrolyte according to claim 1, wherein an integrated irradiation energy is 1.0 kW s/g or more during the irradiation of microwaves at an output of 140 W/g or more per unit mass of the raw material inclusion contained in the mixture.

3. The method for producing a sulfide solid electrolyte according to claim 1 or 2, wherein the organic solvent has a dielectric loss factor at 25°C of 10.0 or less.

4. The method for producing a sulfide solid electrolyte according to any one of claims 1 to 3, wherein the organic solvent has a boiling point of 50°C or higher.

5. The method for producing a sulfide solid electrolyte according to any one of claims 1 to 4, wherein the organic solvent is an aromatic solvent.

6. The method for producing a sulfide solid electrolyte according to any one of claims 1 to 5, wherein a content of the raw material inclusion contained in the mixture is 1% by mass or more and 20% by mass or less.

7. The method for producing a sulfide solid electrolyte according to any one of claims 1 to 6, wherein the microwave irradiation is performed to heat the mixture at 150°C or higher and 360°C or lower.

8. The method for producing a sulfide solid electrolyte according to any one of claims 1 to 7, wherein the raw material inclusion contains lithium sulfide, phosphorus sulfide, and a lithium halide.

9. The method for producing a sulfide solid electrolyte according to any one of claims 1 to 8, wherein the sulfide solid electrolyte is a crystalline sulfide solid electrolyte having an argyrodite type crystal structure.

10. The method for producing a sulfide solid electrolyte according to any one of claims 1 to 9, wherein the raw material inclusion contains a raw material sulfide solid electrolyte as a raw material.

11. The method for producing a sulfide solid electrolyte according to claim 10, further comprising: mixing and pulverizing a raw material inclusion B containing at least two kinds of compounds in a solvent to obtain a raw material mixture; and calcining the raw material mixture to obtain the raw material sulfide solid electrolyte.

12. The method for producing a sulfide solid electrolyte according to claim 11, wherein a heating temperature in the calcining is 150°C or higher and 300°C or lower.

[Fig. 1]

[Fig. 2]

[Fig. 3]

[Fig. 4]

[Fig. 5]

[Fig. 6]

[Fig. 7]

EP 4 468 314 A1

# INTERNATIONAL SEARCH REPORT

| International application No. |
|---|
| **PCT/JP2023/000708** |

## A. CLASSIFICATION OF SUBJECT MATTER

***H01B 13/00***(2006.01)i; ***C01B 25/14***(2006.01)i; ***H01B 1/10***(2006.01)i; ***H01M 4/62***(2006.01)i; ***H01M 10/052***(2010.01)i; ***H01M 10/0562***(2010.01)i

FI: H01B13/00 Z; C01B25/14; H01B1/10; H01M10/0562; H01M4/62 Z; H01M10/052

According to International Patent Classification (IPC) or to both national classification and IPC

## B. FIELDS SEARCHED

Minimum documentation searched (classification system followed by classification symbols)

H01B13/00; C01B25/14; H01B1/10; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2021-163758 A (IDEMITSU KOSAN CO., LTD.) 11 October 2021 (2021-10-11) paragraphs [0007], [0077]-[0088] | 1-12 |
| Y | JP 2020-15661 A (TOYOTA MOTOR ENGINEERING & MANUFACTURING NORTH AMERICA INC.) 30 January 2020 (2020-01-30) paragraph [0027] | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/000708**

| Patent document cited in search report | | | Publication date (day/month/year) | Patent family member(s) | | | Publication date (day/month/year) |
|---|---|---|---|---|---|---|---|
| JP | 2021-163758 | A | 11 October 2021 | (Family: none) | | | |
| JP | 2020-15661 | A | 30 January 2020 | US paragraph [0038] | 2020/0030768 | A1 | |
| | | | | EP | 3599659 | A1 | |
| | | | | CN | 110783567 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017159667 A
- JP 2014191899 A
- WO 2014192309 A
- WO 2018054709 A
- JP 2020015661 A
- JP 2013016423 A

**Non-patent literature cited in the description**

- *CHEMISTRY OF MATERIALS*, 2017 (29), 1830-1835
- *Journal of Materials Chemistry A*, 2018 (6), 21261-21265
- *Journal of Materials Chemistry A*, 2018 (9), 400-405
- **KANNO et al.** *Journal of The Electrochemical Society*, 2001, vol. 148 (7), A742-746
- *Solid State Ionics*, 2006, vol. 177, 2721-2725